# EUROPÄISCHE PATENTSCHRIFT

(11) **EP 2 534 382 B1**
(45) Veröffentlichungstag und Bekanntmachung des Hinweises auf die Patenterteilung: **13.01.2021**
(21) Anmeldenummer: 11702042.0
(22) Anmeldetag: 02.02.2011
(51) Int. Cl.: F15D 1/06

(54) **PRODUKT FÜR STRÖMUNGSTECHNISCHE ANWENDUNGEN**
PRODUCT FOR FLOW APPLICATIONS
PRODUIT POUR APPLICATIONS AVEC ÉCOULEMENT

(30) Priorität: 10.02.2010 DE 102010007570
(43) Veröffentlichungstag der Anmeldung: 19.12.2012
(73) Patentinhaber: ThyssenKrupp Steel Europe AG, 47166 Duisburg (DE); Outokumpu Nirosta GmbH, 47807 Krefeld (DE)
(72) Erfinder: KRAUTSCHICK, Hans-Joachim, 42657 Solingen (DE); HÜLSTRUNG, Joachim, 40629 Düsseldorf (DE)
(74) Vertreter: Cohausz & Florack
(86) Internationale Anmeldenummer: PCT/EP2011/051488
(87) Internationale Veröffentlichungsnummer: WO 2011/098383

(56) Entgegenhaltungen:
- EP-A1- 0 284 187
- EP-A1- 1 857 722
- EP-A2- 0 216 384
- WO-A2-2008/036074
- DE-A1- 10 130 392
- DE-U1- 20 114 878
- JP-A- 2010 007 846

## Beschreibung

Die Erfindung betrifft ein Produkt für strömungstechnische Anwendungen, mit mindestens einem Oberflächenabschnitt, der dazu vorgesehen ist, mit einem in eine Strömungsrichtung strömenden Fluid in Kontakt zu kommen, wobei in dem mit dem Fluid in Kontakt kommenden Abschnitt Rippen bestimmter Länge und Form ausgebildet sind, von denen benachbarte Rippen zwischen sich jeweils ein Tal begrenzen.

Bei Produkten der voranstehend angegebenen Art handelt es sich beispielsweise um Bleche oder daraus hergestellte Rohre und andere Strömungskörper, die im praktischen Einsatz von einem fließfähigen Medium durch- bzw. angeströmt werden. Solche Produkte finden beispielsweise Verwendung bei der Herstellung von Wärmetauschern für solarthermische Anlagen, als Saugrohre von im Haushalt oder großtechnisch eingesetzten Saugeinrichtungen oder anderen Anwendungen. Im Hinblick auf eine optimale Energieausnutzung besteht bei diesen und vergleichbaren strömungstechnischen Anwendungen ein wesentliches Konstruktionsziel darin, Strömungsverluste auf ein Minimum zu reduzieren.

Bei dem die erfindungsgemäßen Produkte anströmenden Fluid kann es sich um eine Flüssigkeit, wie Wasser, Öl, eine Suspension, oder Dispensionen, ein Gas oder Gasgemisch, wie beispielsweise Luft, Sauerstoff, Stickstoff, Argon oder desgleichen, handeln. Als Fluid in Frage kommen auch Gemische gleicher Phasen wie auch mehrphasige Medien, wie Gas-Flüssigkeits- oder Partikel-Fluidmischungen bzw. Partikel-Gasströmungen. Einzelne Phasenanteile können Konzentrationsunterschiede aufweisen. Ebenso kann ein Stoffaustausch innerhalb einer Phase oder zwischen den Phasen des strömenden Fluids auftreten.

Die bei der Herstellung von Rohren, Blechen und Blechfolien wie auch Folien im Allgemeinen angewendeten Verfahren sind sehr unterschiedlich. Aus Stahl- oder Leichtmetallwerkstoffen hergestellte Bleche, Blechfolien und Folien werden im Herstellungsprozess üblicherweise warm- oder kaltgewalzt. Bestehen sie aus einem korrosionsempfindlichen Werkstoff werden sie darüber hinaus üblicherweise zusätzlich beschichtet. So werden aus nicht korrosionsbeständigen Stählen erzeugte Bleche üblicherweise mit Zink, Zinn, Zink-Magnesium beschichtet. Zusätzlich oder alternativ kann auch eine Lackbeschichtung vorgenommen werden.

Bei der Herstellung von für strömungstechnische Anwendungen geeigneten Rohren aus Blechen werden die Bleche üblicherweise zunächst zu einem Schlitzprofil geformt. Anschließend wird der dabei entstehende Schlitz durch ein Schweißverfahren geschlossen. Alternativ können Rohre auch nahtlos aus Rundstrangmaterial gefertigt werden.

Allen bekannten Verfahren zur Herstellung von Bauteilen, die für strömungstechnische Anwendungen bestimmt sind, ist gemeinsam, dass die Oberflächenstruktur der erzeugten Produkte nach dem derzeitigen Stand der Technik folgende Merkmale aufzeigt:
- Die Oberflächenstruktur ist stochastischer Natur und nur ungenau beschrieben. Zur Beschreibung der Oberflächentopographie und Rauheit bedient man sich statistischen Mittelwerten, wie beispielsweise dem arithmetischen Mittenrauhwert Ra, der maximalen Rauhtiefe Ry, der gemittelten Rauhtiefe Rz etc.
- Bei der Erzeugung von Blechen kann die Topologie oder Rauheit eines Blechs über eine Texturierung der beim Warm- oder Kaltwalzen der Bleche eingesetzten Arbeitswalzen beeinflusst werden. So können durch eine entsprechende Walztexturierung die voranstehend genannten Kennwerte beeinflusst und damit einhergehend der visuelle Eindruck der Oberfläche, die Lackierbarkeit oder das Verformungsverhalten bei nachfolgenden Formgebungsschritten, wie dem Tiefziehen und Pressen, beeinflusst werden. Die auf diese Weise erzeugbare Oberflächenstruktur bleibt aber im Wesentlichen stochastischer Natur.
- Zur Beschreibung der hier im Mittelpunkt stehenden, für das strömungsdynamische Verhalten von Produktoberflächen wesentlichen Eigenschaften bedient man sich ebenfalls bestimmter Kennwerte, der Sandrauhigkeit, des Reibungsbeiwerts X, der Widerstandszahl und ähnlichen empirisch ermittelten Kennzahlen, um die Reibung und den an der jeweils angeströmte Fläche eintretenden Druckverlust zu beschreiben. Die betreffenden Kennzahlen sind zum einen von der Art der Strömung (laminar, turbulent) und zum anderen vom Werkstoff sowie dem Verfahren beeinflusst, das bei der Herstellung des mit dem strömenden Fluid jeweils in Kontakt kommenden Produktes angewendet worden ist. So liegt für ein längsnahtgeschweisstes Stahlrohr, Walzhaut neu, der Wert für die äquivalente Sandrauheit k typischerweise im Bereich von 0,04 bis 0,1 mm (stochastisch).

Mit Blick auf den effizienten Einsatz von Ressourcen sowie die umwelt- und klimaschonende Verwendung von Energien - hier Strom, Pumpleistung, Kraftstoffe und desgleichen - kommt der Minimierung von Strömungsverlusten in durchströmten oder an angeströmten Bauteilen eine besondere Bedeutung zu. Die aufzuwendende Energie, um ein Fluid durch ein Rohr zu befördern oder um einen Körper umströmen zu lassen, richtet sich nach den Reibungsverlusten, die der dem Fluidkontakt ausgesetzte Abschnitt des jeweiligen Bauteils, also die Innenfläche eines durchströmten Rohrs oder die jeweilige Wand eines angeströmten Körpers, im Fluid generiert. Für eine Relativbewegung von Bauteil und Fluid muss jeweils mindestens die zwischen ihnen herrschende Reibung überwunden werden.

Im Fall eines durchströmten Rohres spricht man vom Druckverlust Dp, der sich beim Durchströmen mit einer Fluidgeschwindigkeit v ergibt. Im Fall der Körperumströmung wird oftmals der Reibungsbeiwert cw als energetische Vergleichsgröße herangezogen.

Reibungsverluste in durch- bzw. an angeströmten Bauteilen ergeben sich grundsätzlich dadurch, dass in der Kontaktzone die Relativgeschwindigkeit zwischen dem Fluid und dem von ihm benetzten Abschnitt des Bauteils gleich Null ist. Zwischen der Fluidgeschwindigkeit an dem betreffenden Abschnitt des Bauteils und der weiter beabstandeten Strömung bildet sich dementsprechend im Fall der Rohrströmung ein zwischen Null an der Rohrinnenwand und einem Maximum der Geschwindigkeit mittig im Rohr liegendes Geschwindigkeitsprofil. Im Fall der Anströmung eines Körpers ergibt sich ein entsprechendes von der "Null-Geschwindigkeit" am jeweiligen Bauteil und einem Geschwindigkeitsmaximum der Strömung im unbeeinflussten, beabstandet vom jeweiligen Bauteil liegenden Außenbereich reichendes Geschwindigkeitsprofil.

Im Bereich des Kontaktes zwischen dem strömenden Fluid und dem Bauteil bilden sich charakteristische Strömungsgebiete, so genannte Grenzschichten, aus, die maßgeblich sowohl die energetischen Verluste wie auch die Wärme- bzw. die Stoffübertragung zwischen Fluid und Wand/Körper bestimmen. Abhängig vom Ort der Betrachtung sowie der Strömungsform (laminar oder turbulent) entstehen laminare Grenzschichten, Übergangsbereiche und turbulente Grenzschichten (sowohl für die Strömung als auch für die Temperatur und die Stoffkonzentration). Deren räumliche Ausdehnung sowie der Ort des Umschlags von laminar nach turbulent lässt sich in Abhängigkeit von der Rauheit k bestimmen.

Wie eingangs erwähnt, ist die Rauheit k regelmäßig eine stochastische Größe und wird bestimmt durch das Herstellungsverfahren. Im Fall der Erzeugung eines Blechs durch Warm- und Kaltwalzen haben die Walzparameter sowie die Oberflächenrauheit der Walze entscheidenden Einfluss auf die Rauheit des erhaltenen Bleches.

Eine andere Ursache für Reibungsverluste oder verminderten Wärmeübergang sind Ablagerungen, die durch Partikel- oder Tropfentransport aus dem Strömungsgebiet im Kontakt mit der jeweils benetzten Wand des Bauteils entstehen. Der Ablagerungsmechanismus wird zum einen durch chemische, metallurgische oder thermodynamische Gesetzmäßigkeiten und zum anderen durch die Rauheit einer Oberfläche bestimmt.

Ebenso beeinflusst der Wärmetransport von einer Wand auf das an ihr entlang strömende Fluid - sei es durch Kühlungsprozesse, Heizprozesse oder Strahlungseinfall - das Fluidverhalten unmittelbar an der Wand. So beeinflusst der Wärmeaustausch insbesondere die Viskosität des jeweiligen Fluids. In Folge der im Bereich der Kontaktfläche zu- oder abgeführten Wärme bildet sich ein Gradient der Viskosität zwischen den wandnahen Bereichen und der wandfernen, unbeeinflussten Strömung. Im Fall einer solarthermischen oder vergleichbaren Anwendung hat die Ausbildung dieses Gradienten Einfluss auf das gesamte Wärmeübertragungsverhalten des betrachteten Gegenstands.

Aus der DE 36 09 541 A1 ist es bekannt, dass der Strömungswiderstand einer durch ein Fluid turbulent angeströmten Fläche, wie beispielsweise einer Innenfläche eines Rohres, dadurch vermindert werden kann, dass an der Oberfläche des betreffenden Körpers in Strömungsrichtung verlaufende Rillen ausgebildet sind, die durch scharfkantig ausgebildete Rippen voneinander getrennt sind. Die Rippen sind in einer Vielzahl von Rippenstaffel angeordnet, die jeweils aus einer Vielzahl quer oder schräg zur Strömungsrichtung nebeneinander mit Abstand angeordneter Rippen bestehen. Die Rippen von in Strömungsrichtung des Fluids aufeinanderfolgender Rippenstaffeln können dazu seitlich zur Strömungsrichtung gegeneinander versetzt angeordnet sein. Gleichzeitig weisen die Rippen der einzelnen Rippenstaffeln kurze Erstreckungen in Strömungsrichtung auf. Quer zur Strömungsrichtung benachbart angeordnete Rippen begrenzen zwischen sich jeweils ein nach Art einer Kannelure ausgebildetes Tal, dessen Übergang zur angrenzenden Rippe kehlig ausgerundet ist. Als entscheidend für die Wirkung der bekannten Oberflächenstrukturierung wird die staffelweise Anordnung angesehen. Durch die gezielte Ausbildung kurzer staffelweise versetzt angeordneter Rippen soll eine besonders effektive Minimierung des Strömungswiderstandes im wandnahen Bereich erzielt werden können.

Aus der EP 1 925 779 A1 ist es darüber hinaus in allgemeiner Form bekannt, dass der Strömungswiderstand an um- bzw. überströmten Flächen dadurch gesenkt und insbesondere der Wirkungsgrad von Strömungsmaschinen weiter erhöht werden kann, dass die um- bzw. überströmte Fläche mit einer Haifischhaut-Effekt erzeugenden Oberflächenstruktur versehen wird. Dies soll durch Materialabtrag, insbesondere durch Ätzen der Oberfläche, oder durch Auftragen eines Überzugs, der die gewünschte Struktur bildet, auf die jeweilige Oberfläche erfolgen.

JP2010007846 zeigt eine weitere mit Rippen versehene Oberfläche.

Vor dem Hintergrund des voranstehend erläuterten Standes der Technik bestand die Aufgabe der Erfindung darin, ein wirtschaftlich herstellbares Produkt mit weiter verbesserten Strömungseigenschaften anzugeben.

Diese Aufgabe erfindungsgemäß dadurch gelöst worden, dass ein solches Produkt gemäß Anspruch 1 ausgebildet ist. Besonders vorteilhaft lässt sich ein erfindungsgemäßes Produkt zur Herstellung von Rohren verwenden, die ein Fluid führen. Aufgrund ihrer besonderen Strömungseigenschaften sind aus erfindungsgemäßen Produkten hergestellte Rohre besonders zum Einsatz in solarthermischen Anlagen, wie Wärmetauschern und desgleichen, geeignet.

Vorteilhafte Ausgestaltungen der Erfindung sind in den abhängigen Ansprüchen dargelegt und nachfolgend erläutert.

Ein erfindungsgemäßes Produkt ist dazu vorgesehen, im praktischen Einsatz für strömungstechnische Anwendungen verwendet zu werden, bei denen mindestens einer seiner Oberflächenabschnitte mit einem in eine Strömungsrichtung strömenden Fluid in Kontakt kommt. Dabei sind in Übereinstimmung mit dem voranstehend erwähnten Stand der Technik in dem mit dem Fluid in Kontakt kommenden Abschnitt Rippen bestimmter Länge und Form ausgebildet, von denen benachbarte Rippen zwischen sich jeweils ein Tal begrenzen.

Typischerweise handelt es sich bei dem erfindungsgemäßen Produkt um ein aus einem metallischen Werkstoff, insbesondere einem Stahl mit ausreichend hoher Korrosionsbeständigkeit, hergestelltes Blech- oder Folienmaterial, wie es zur Herstellung von Rohren oder anderen Strömungskörpern eingesetzt wird, bei denen es im praktischen Einsatz zu einem Kontakt mit einem relativ zu ihnen bewegten Fluid kommt.

Bei einem erfindungsgemäßen Produkt sind die an dessen Oberfläche ausgebildeten Rippen und die dazwischen liegenden Täler nicht mehr gleichförmig und in gleichmäßiger Anordnung platziert, sondern so ausgebildet, dass durch eine gezielte Gruppierung und Positionierung unterschiedlich beschaffener Rippen und Täler eine Oberflächenstruktur geschaffen wird, die einerseits kostengünstig großtechnisch reproduzierbar herstellbar ist und andererseits hinsichtlich der Minimierung von Strömungsverlusten optimiert ist.

Diese Optimierung wird dadurch erreicht, dass durch die erfindungsgemäße Gruppierung von Rippen und Tälern mit zwischen den Gruppen liegenden Tälern, die eine andere Gestalt besitzen als die ihnen benachbarten Täler der Gruppen, die Entstehung von oberflächennahen Turbulenzen in der Strömung besonders wirksam verhindert wird. Überraschend hat sich hierbei gezeigt, dass nicht die im Stand der Technik noch für zweckmäßig gehaltene staffelweise geordnete, nach dem Vorbild des Haifischhaut-Effekts ausgebildete Oberflächenstruktur besonders wirksam ist, sondern eine vergleichbar ungeordnete Anordnung der Rippen und der Täler mit jeweils gesonderter Formgebung der Rippen und Täler ein besonders günstiges Strömungsverhalten ergibt.

Dabei besteht ein besonderer Vorteil der erfindungsgemäßen Formgebung der Oberflächenstruktur darin, dass sich das erfindungsgemäß vorgegebene Muster der Anordnung der aus Rippen und Täler gebildeten Gruppen trotz der abweichenden Formgebung der die Gruppen trennenden Täler auf einfache Weise und sicher reproduzierbar maschinell erzeugen lässt. Handelt es sich bei dem erfindungsgemäßen Produkt um ein Metallblech, kann die erfindungsgemäße Oberflächenstruktur beispielsweise auf einfache Weise in einem Walzschritt in die Oberfläche des Blechs eingeprägt werden, indem es mit einer mit einer entsprechenden Negativprägung versehenen Walze gewalzt wird.

Mit der Erfindung steht somit ein Produkt zur Verfügung, das zumindest in dem Bereich, in dem es unmittelbar einem relativ zu ihm strömenden Fluid ausgesetzt ist, eine hinsichtlich ihres Strömungswiderstands optimierte Oberfläche besitzt. Selbstverständlich ist die Ausdehnung der erfindungsgemäß strukturierten Oberfläche nicht notwendig nur auf den jeweils mit dem Fluid in Kontakt kommenden Abschnitt des Produktes beschränkt. Vielmehr kann sich die erfindungsgemäße Oberflächenstruktur auch über die gesamte Oberfläche des Produktes erstrecken, wenn dies beispielsweise unter herstellungstechnischen Aspekten zweckmäßig ist.

Abhängig vom jeweiligen Anwendungsfall kann es auch sinnvoll sein, wenn das erfindungsgemäße Produkt im Bereich seiner mit dem Fluid in Kontakt kommenden Oberfläche Abschnitte, in denen Gruppen von Rippen und Tälern ausgebildet sind, und Abschnitte aufweist, in denen solche Gruppen nicht vorhanden sind, die also insbesondere eben ausgebildet sind oder eine andere Struktur besitzen. So ist es denkbar, an der vom Fluid benetzten Fläche des Produkts wechselweise mit erfindungsgemäß ausgebildeten Gruppen von Rippen und Tälern versehene Abschnitte und anders geformte Abschnitte aufeinander folgen zu lassen. Ebenso können in einem eben ausgebildeten Abschnitt inselartig Gruppen von Rippen und Täler aufweisende, erfindungsgemäß ausgebildete Abschnitte angeordnet sein.

In Folge der erfindungsgemäß geformten Oberflächenstruktur stellen sich in einem durchströmten Bauteil (Rohr) oder an einem an- bzw. umströmten Körper im Hinblick auf den Strömungswiderstand optimale Verhältnisse ein. So lassen sich durch die erfindungsgemäße Formgebung beispielsweise die Dicke der Strömungsgrenzschicht, die Dicke der Temperaturgrenzschicht, die Lage und Ausdehnung des Übergangsgebiets, in dem die Wandströmung von laminar nach turbulent umschlägt, das Wärmeübertragungsverhalten zwischen angeströmten Wandabschnitt und Fluid, das Stoffübertragungsverhalten zwischen abgeströmtem Wandabschnitt und Fluid, die Mischungsvorgänge von wandnahen Bereichen zur ungestörten Strömung außerhalb des wandnahen Bereiches, das Partikel- oder Tropfenverhalten in einer Strömung mit Kontakt zu einer Oberfläche, die Eigenschaften des Fluids im wandnahen Bereich und die Reibungsverluste optimieren.

Die Abweichung des Höhenprofils eines zwei benachbarte Gruppen voneinander trennenden Tals vom Höhenprofil der zu ihm benachbarten Täler der Gruppen kann auf einfachste Weise dadurch erreicht werden, dass der Boden des die zueinander benachbart angeordneten Gruppen jeweils trennenden Tals tiefer liegt als der Boden der Täler der an das sie trennende Tal angrenzenden Gruppen. Ebenso kann eine Abweichung des Höhenprofils darin bestehen, dass das zwei Gruppen trennende Tal konkav eingewölbt ist, während die benachbarten Täler der Gruppen konvex ausgewölbt sind, oder umgekehrt. Denkbar ist es darüber hinaus, dass das zwei benachbarte Gruppen jeweils trennende Tal mit Furchen oder Rippen versehen ist, während die zu ihm benachbarten Täler der Gruppen eine gleichförmig glatte Oberfläche besitzen, oder umgekehrt.

Die Effektivität, mit der sich die Entstehung von oberflächennahen Turbulenzen unterdrücken lässt, kann auch dadurch weiter gesteigert werden, dass mindestens eine Rippe einer jeden Gruppe eine größere Höhe aufweist als die anderen Rippen der Gruppe, also mindestens zwei Rippen einer Gruppe unterschiedliche Höhen aufweisen.

Bezogen auf den Boden des Tals, das zwei jeweils quer zur Strömungsrichtung betrachtet benachbarte Gruppen voneinander trennt, liegt die Höhe der Rippen bei einem erfindungsgemäßen Produkt typischerweise im Bereich von 10 - 2000 µm.

Zur Vermeidung der Entstehung einer wandnahen laminaren Strömung trägt es auch bei, wenn bei einer erfindungsgemäßen Oberflächenstruktur die aus Rippen und den zwischen ihnen begrenzten Tälern gebildeten Gruppen in Strömungsrichtung des Fluids betrachtet versetzt zueinander angeordnet sind. Im Fall einer solchen Anordnung der Gruppen kommt es zu einem besonders intensiven Austausch der Strömungsschichten, wodurch insbesondere der Wärmeübergang zwischen dem jeweils angeströmten Flächenabschnitt und dem anströmenden Fluid positiv beeinflusst wird.

Ebenso kann es sich günstig auf das Strömungsverhalten und den Wärmeübergang auswirken, wenn in Strömungsrichtung des Fluids betrachtet hintereinander liegende Gruppen oder die quer zur Strömungsrichtung des Fluids betrachtet nebeneinander liegenden Gruppen mit Abstand zueinander angeordnet sind. Die sich im Bereich der typischerweise eben ausgebildeten Abstandsflächen gegebenenfalls ergebenden Grenzschichtströmungen treffen dann nach einer durch den Abstand bestimmten Lauflänge auf eine Gruppe von Rippen und Tälern, an der sie ihre Form und Richtung wechseln mit der Folge, dass es zu einem Austausch der verschiedenen Strömungsschichten kommt. Besonders intensiv wirkt sich dies aus, wenn der Boden der Abstandsfläche, die zwischen beabstandet zueinander angeordneten Gruppen vorhanden ist, tiefer liegt als der Boden der Täler der an die jeweilige Abstandsfläche grenzenden Gruppen oder in Strömungsrichtung des Fluids betrachtet hintereinander angeordnete Gruppen quer zur Strömungsrichtung gegeneinander versetzt positioniert sind. Demselben Zweck dient es, wenn mindestens zwei Gruppen einen unterschiedlichen Abstand zu einer der zu ihr benachbarten Gruppen aufweisen.

Neben der durch die beabstandete Anordnung der Gruppen erzielten erfindungsgemäßen Makrostukturierung kann eine im Hinblick auf die Optimierung des Strömungsverhaltens ebenfalls positive Feinstrukturierung der Oberfläche dadurch erzielt werden, dass jede der Gruppen mindestens zwei Untergruppen umfasst, die jeweils mindestens zwei Rippen und das von diesen Rippen begrenzte Tal umfassen und quer zur Strömungsrichtung des Fluids betrachtet durch ein sie trennendes Tal voneinander separiert sind. Indem dabei das Höhenprofil des die jeweiligen Untergruppen voneinander trennenden Tals sich jeweils von dem Höhenprofil der Täler unterscheidet, die durch diejenigen Rippen der Untergruppen begrenzt sind, die gleichzeitig an das die Untergruppen voneinander trennende Tal grenzen, kann dabei auch in der Feinstruktur die erfindungsgemäße strömungstechnisch günstige Ausprägung der Rippen und Täler genutzt werden.

Herstellungstechnisch einfach lässt sich die erfindungsgemäße Oberflächenstruktur dadurch erzeugen, dass die aus Rippen und den zwischen ihnen jeweils begrenzten Tälern gebildeten Gruppen und deren Untergruppen jeweils eine rechtwinklig ausgebildete Fläche besetzen. Gerade dann, wenn die einzelnen Gruppen und ihre Untergruppen durch Walzen oder ein vergleichbares Formgebungsverfahren in die Oberfläche des Produktes eingeprägt werden, ist es dabei günstig, wenn die Anordnung der Gruppen einem bestimmten sich widerholenden Muster folgt. Im Fall, dass die Gruppen Untergruppen umfassen, können diese in Draufsicht gesehen kreuzförmig oder derart angeordnet sein, dass Mittelpunkte der von ihnen jeweils eingenommenen Fläche die Eckpunkte eines Dreiecks bilden.

Um auch im Bereich der zu einer Gruppe zusammengefassten Untergruppen die Entstehung von Turbulenzen möglichst zu vermeiden, kann es zweckmäßig sein, wenn mindestens zwei der Untergruppen voneinander unterschiedliche Höhenprofile aufweisen.

Typischerweise nehmen die Gruppen, sofern sie keine Untergruppen aufweisen, bzw. ihre Untergruppen jeweils eine Fläche 10x10 µm² bis 2000 x 2000 µm² ein. Sind mehrere Untergruppen zu einer Gruppe zusammengefasst, kann diese Gruppe eine wesentlich größere Fläche abdecken.

Typischerweise ist somit in ein erfindungsgemäßes Produkt in einem Abschnitt, der im praktischen Einsatz einer Fluidströmung ausgesetzt ist, eine Oberflächenstruktur eingeprägt, die eine Gruppe mit mindestens zwei Rippen und einem dazwischen liegendem Tal umfasst, wobei die Länge und Breite der von der Gruppe eingenommenen Fläche typischerweise jeweils 10 - 2000 µm beträgt und mindestens eine der Rippen zwischen 10 - 2000 µm hoch ist, wobei die Rippen der Gruppe durch mindestens ein Tal miteinander verbunden sind und dieses Tal mindestens einen Bereich aufweist, der höher ist als der Boden des bevorzugt strukturlosen, zwischen zueinander benachbarten Gruppen liegenden Tals.

Um im Bereich der von der Fluidströmung angeströmten Stirnflächen der Rippen die Entstehung von Turbulenzen zu verhindern, kann es sinnvoll sein, die betreffende Stirnfläche anzuschrägen oder abzurunden. Mit demselben. Ziel können auch die abströmseitigen Rippenflächen abgeschrägt oder abgerundet sein, um dort einen Strömungsabriss zu vermeiden. Strömungstechnisch günstig kann es sich darüber hinaus wirken, wenn die Seitenflächen der Rippen in Strömungsrichtung gesehen ausgehend von einer vergleichbar breiten stirnseitigen Anströmfläche in Richtung der schmaleren abströmseitigen Stirnfläche der Rippe aufeinander zulaufen oder angeschrägt sind.

Typischerweise handelt es sich bei den erfindungsgemäßen Produkten um walztechnisch hergestellte Stahlflachprodukte, wie Edelstahlband- oder -spaltband.

Nachfolgend wird die Erfindung anhand einer ein Ausführungsbeispiel darstellenden Zeichnung näher erläutert. Es zeigen jeweils schematisch:
- Fig. 1a - 1f: verschiedene mögliche nicht erfindungsgemäße Querschnittsformen von in eine erfindungsgemäße Oberflächenstruktur ausgebildeten Rippen;
- Fig. 2a - 2d: verschiedene mögliche nicht erfindungsgemäße Formen von in einer Oberflächenstruktur ausgebildeten Rippen in seitlicher Ansicht;
- Fig. 3a - 3b: verschiedene mögliche Formen von in eine erfindungsgemäße Oberflächenstruktur ausgebildeten Rippen in perspektivischer Ansicht;
- Fig. 4a - 4h: verschiedene Höhenprofile von Gruppen einer erfindungsgemäßen Oberflächenstruktur, von denen die in den Figuren 4a, 4b dargestellten Höhenprofile erfindungsgemäß und die in den Figuren 4c - 4h dargestellten Höhenprofile nicht erfindungsgemäß sind;
- Fig. 5a - 5b: verschiedene Anordnungen von Gruppen einer erfindungsgemäßen Oberflächenstruktur in perspektivischer Ansicht;
- Fig. 6a - 6b: verschiedene Oberflächen eines Stahlfachproduktes in Draufsicht;
- Fig. 7: eine nicht erfindungsgemäße Oberflächenstruktur in perspektivischer Ansicht;
- Fig. 8a - d: jeweils eine verschiedene Untergruppen umfassende Gruppen einer Oberflächenstruktur in Draufsicht;
- Fig. 9: ein Rohr für einen Wärmetauscher in einem Querschnitt.

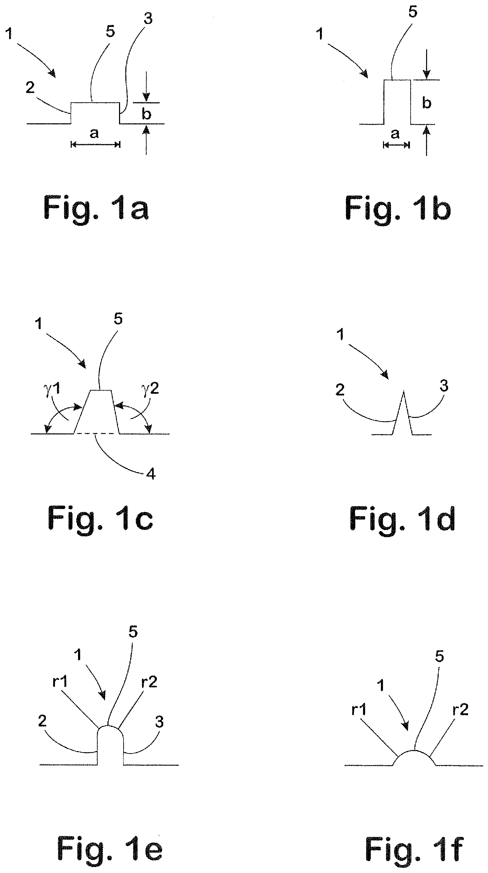

In den Fig. 1a - 1f sind verschiedene mögliche Querschnittsformen von in einer Oberflächenstruktur eines beispielsweise in Form eines warm- und kaltgewalzten Edelstahlblechs vorliegenden Produkts P geprägten Rippen 1 dargestellt. Die Dicke a und die Höhe b der Rippen 1 liegen jeweils im Bereich von 0 bis 2000 pm, während die zwischen den Flanken 2,3 und der Grundfläche 4 der Rippen 1 eingeschlossene Winkel γ1,γ2 von 0° bis 125° betragen können. Dabei können die Winkel γ1,γ2 gleich oder ungleich sein.

Die Dachfläche 5 der Rippen kann eben (Figuren 1a - 1c) oder konkav (Fig. 1e) bzw. konvex gewölbt sein. Dabei können die im Bereich von 0 bis 2000 µm liegenden Übergangsradien r1,r2 zu den Flanken 3,4 der Rippe 1 ungleich oder gleich ausgebildet sein. Ebenso ist es denkbar, die Rippe 1 mit spitzwinklig aufeinander nach oben zulaufenden Flanken 3,4 auszubilden, so dass eine dreieckige Querschnittsform entsteht (Fig. 1d), oder eine Rippe 1 einzusetzen, bei der keine ausgeprägten Flanken, sondern nur eine konkav ausgewölbte Dachfläche 5 vorhanden ist (Fig. 1f).

Querschnittsprofile können in der Dicke a, der Höhe b, den Winkeln γ1,γ2,sowie der Radien r1 und r2 gleitend (linear und nichtlinear) zu- bzw. abnehmen, um auf diese Weise eine Profiländerung in Strömungsrichtung S zu erreichen.

In Strömungsrichtung S können die Rippen 1 einen geradlinigen oder einen ein- oder mehrfach gebogenen Verlauf aufweisen. Ebenso ist es denkbar, die Querschnittsform der Rippen 1 in Strömungsrichtung S ein- oder mehrfach zu verändern.

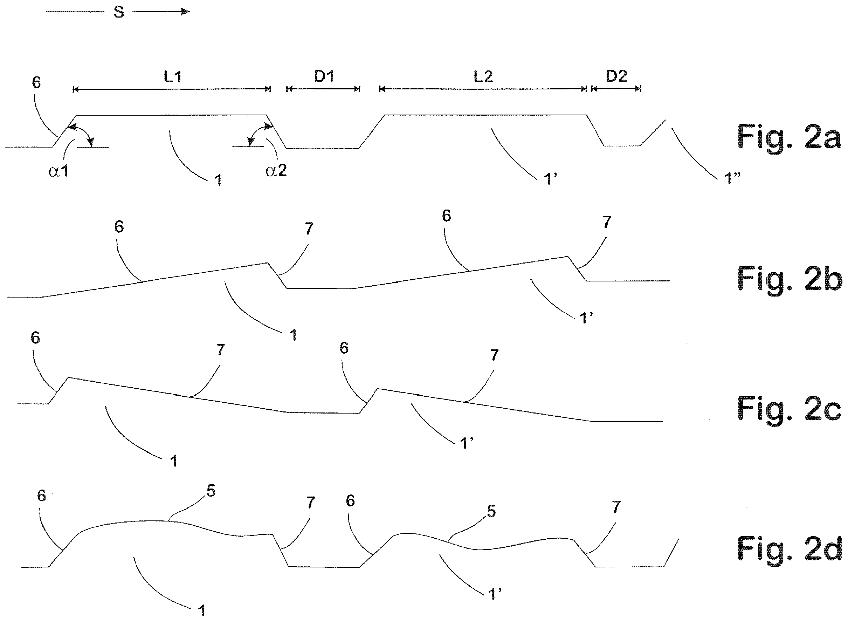

In Strömungsrichtung hintereinander angeordnete Rippen 1,1',1" können, wie in den Figuren 2a - 2d angedeutet, in Strömungsrichtung S des jeweiligen Fluids unterschiedliche Längen L1,L2, unterschiedliche Höhenverläufe ihrer Dachflächen 5, sowie unter unterschiedlichen Winkeln α1,α2 angeschrägte stirnseitige Anströmflächen 6 und Abströmflächen aufweisen. Die Abstände D1,D2 zwischen in Strömungsrichtung S aufeinander folgenden Rippen 1,1',1" können ebenfalls voneinander differieren. Es sind auch Rippenformen denkbar, bei denen keine ausgeprägten Dachflächen vorhanden sind, sondern bei denen die Anström- 6 und Abströmfläche 7 unmittelbar gegeneinander stoßen (Figuren 2b, 2c).

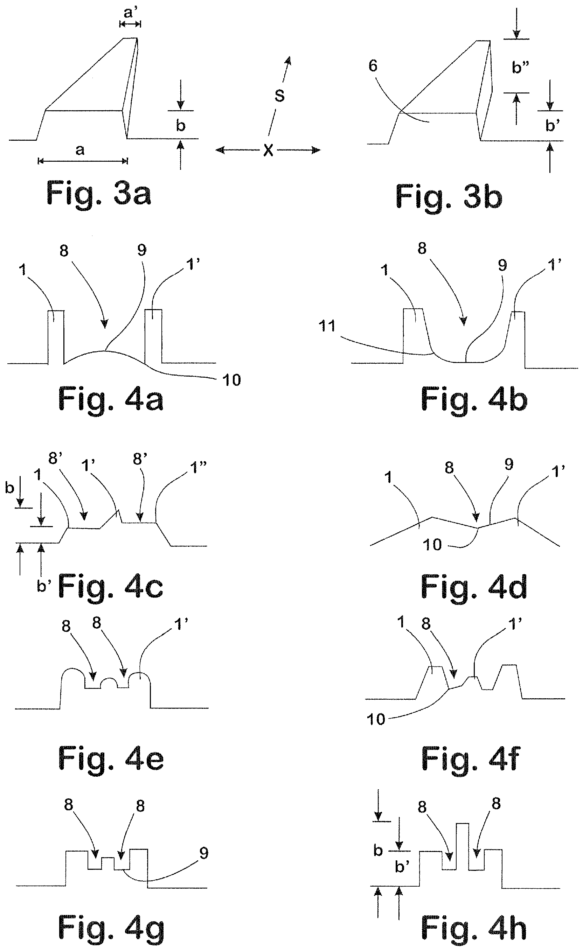

Die Rippen 1,1',1" können in Strömungsrichtung S betrachtet eine konstante Dicke a aufweisen. Ebenso ist es möglich, die Dicke a der Rippen 1,1',1" über deren Länge L1,L2 zu variieren. Dabei können sich die Rippen 1,1',1" wie in den Figuren 3a,3b angedeutet in Strömungsrichtung S gesehen ausgehend von einer großen Dicke a im Bereich der Anströmfläche 6 hin zu einer geringen Dicke a' im Bereich der Abströmfläche 7 verjüngen. Dazu können die Flanken 2,3 der Rippen 1 in Richtung der Abströmfläche 7 aufeinander zulaufen. Ebenso kann die Höhe b der Rippen 1,1',1" konstant sein oder über die jeweilige Länge L1,L2 der Rippen 1,1',1" variiert werden. So kann die Höhe b in Strömungsrichtung S von einer geringen Höhe b' im Bereich der Anströmfläche 6 zu einer großen Höhe b" im Bereich der Abströmfläche zunehmen oder umgekehrt.

Darüber hinaus kann es günstig sein, wenn die Rippen 1,1',1" in Strömungsrichtung S gesehen einen Bogen beschreiben oder mehrfach gekrümmt verlaufen.

Die zu jeweils einer Gruppe G zusammengefassten Rippen 1,1',1" begrenzen zwischen sich jeweils ein Tal 8,8',8", das die Rippen 1,1',1" miteinander verbindet. Das jeweilige Tal 8,8',8" kann dabei beispielsweise einen konvex ausgewölbten (Fig. 4a), einen konkav eingewölbten (Fig. 4b), einen im Querschnitt trichterfömigen (Fig. 4d) oder einen ebenen Boden 9 aufweisen und in einer scharf definierten Kante 10 oder einer kontinuierlich gekrümmten Kehle 11 in die angrenzenden Rippen übergehen. Ebenso kann das jeweilige Tal 8' auch als zwischen zwei stufenartig aufeinander folgenden Rippen 1,1' unterschiedlicher Höhe b,b' vorhandenes Plateau ausgebildet sein (Fig. 4c).

Jede Gruppe G umfasst demnach mindestens zwei Rippen 1,1',1". Die Rippen 1,1',1" einer Gruppe können gleiche Höhen b (Fig. 4a, 4b) aufweisen. Ebenso kann es zweckmäßig sein, wenn mindestens eine Rippe 1' einer Gruppe G eine von der Höhe b der anderen Gruppen abweichende Höhe b' besitzt (Fig. 4c - 4h).

Abhängig von der Größe der jeweiligen Gruppen G,G' liegen die in Querrichtung X zur Strömungsrichtung S gemessenen Abstände q,q' der Gruppen G zueinander im Bereich von 5 µm bis 10 mm. Die Abstände q,q' können für alle in Querrichtung X angeordneten Paare von benachbarten Gruppen G,G' gleich sein oder variiert werden. Sie können dabei einer beliebigen Funktion folgen, um spezifische Eigenschaften lokal einzustellen.

Die zwischen zwei benachbart zueinander angeordneten Gruppen G,G' vorhandenen Täler 12,12' können dabei eben ausgebildet sein oder ein von einer Ebene abweichendes Höhenprofil aufweisen. Das Höhenprofil des die jeweiligen Gruppen G,G' voneinander trennenden Tals 12,12' unterscheidet sich jeweils vom Höhenprofil der Täler 8,8', die durch diejenigen Rippen 1,1' der Gruppen G,G' begrenzt sind, die gleichzeitig an das die Gruppen G,G' voneinander trennende Tal 12,12' grenzen.

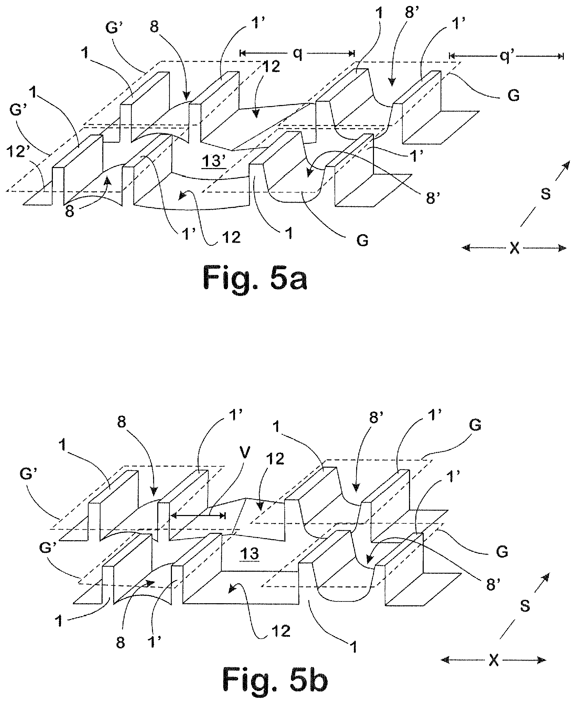

In Strömungsrichtung S gesehen können die Gruppen G,G' in Reihen fluchtend zueinander (Fig. 5a) oder in Querrichtung X versetzt zueinander angeordnet sein (Fig. 5b). Im Fall der versetzten Anordnung muss der Versatz V nicht für alle Gruppen G,G' gleich sein, sondern kann ebenfalls variiert werden, um spezifische Eigenschaften lokal einzustellen.

Darüber hinaus können die Gruppen G,G', wie in den Figuren 5a,5b ebenfalls gezeigt, in Strömungsrichtung S mit einem Abstand Z zueinander angeordnet sein. Dieser muss ebenfalls nicht konstant sein, sondern kann für jedes Paar von in Strömungsrichtung S benachbart zueinander angeordneten Gruppen G,G' unterschiedlich ausfallen, um spezifische Eigenschaften lokal einzustellen. Die in Strömungsrichtung S dann zwischen den in dieser Richtung beabstandeten Gruppen G,G vorhandenen Abstandsflächen 13,13' können wie die die Gruppen G,G' in Querrichtung X trennenden Täler 12,12' eben oder in anderer Weise geformt sein, um lokal spezifische Eigenschaften der Oberfläche einzustellen. Abhängig von den jeweiligen örtlichen Gegebenheiten können die Täler 12,12' und die Abstandsflächen 13,13' zusammenfallen. Dies ist beispielsweise dann der Fall, wenn Gruppen G,G' und Abstandsflächen 13,13' bzw. die Gruppen voneinander trennenden Täler 12,12' schachbrettartig abwechselnd angeordnet sind.

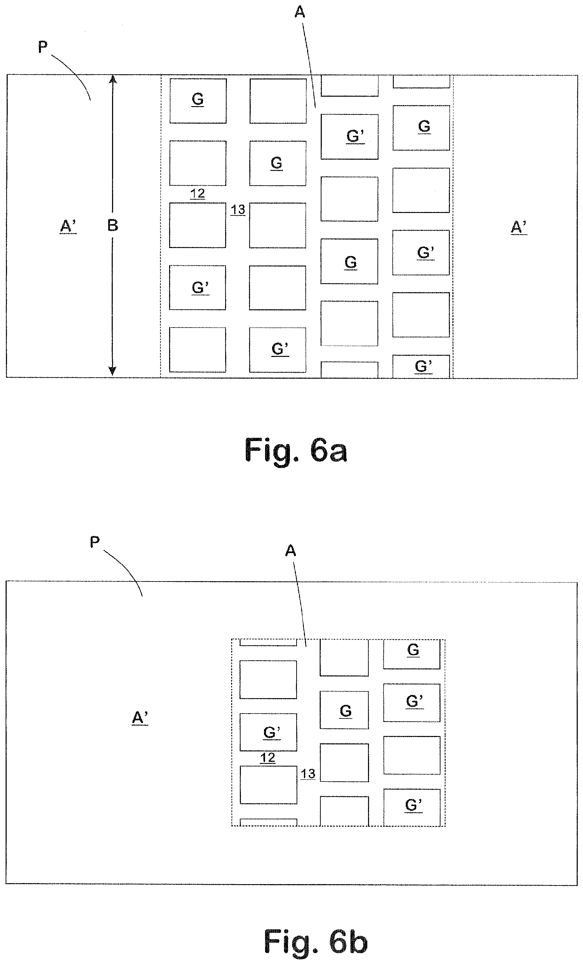

Das als Edelstahlblech vorliegende Produkt P kann Oberflächenabschnitte A' aufweisen, die frei von Gruppen G,G' und weitestgehend eben ausgebildet sind. Die Abschnitte A der Oberfläche des Produkts P, in denen die Gruppen G,G' sitzen, können sich dabei über die gesamte Breite B des Produkts P erstrecken und jeweils zwischen zwei ebenen Oberflächenabschnitten A' sitzen (Fig. 6a) oder inselartig in einem ebenen Oberflächenabschnitt A' angeordnet sein (Fig. 6b).

Durch die Ausbildung einer erfindungsgemäßen Oberflächenstruktur an bestimmten Abschnitten A des Produktes P lassen sich ortsbezogen definierte Eigenschaften aufprägen. So ist es durch Ausprägen einer erfindungsgemäßen Oberflächenstruktur möglich, lokal oder ortsbezogen ein bestimmtes Wärme- bzw. Stoffübertragungsverhalten, einen bestimmten Druckverlust, einen bestimmten Reibungseffekt oder einen bestimmten optischen Effekt, wie z.B. den Emissions- oder Absorptionskoeffizient bei Sonnenstrahlung, einzustellen.

Die Gruppen G,G' können jeweils Untergruppen U,U',U" umfassen, die relativ zueinander in gleicher Weise angeordnet sind wie die Gruppen G,G'. Die Untergruppen U,U',U" einer Gruppe G,G' können dabei in Strömungsrichtung S hintereinander oder in Querrichtung X nebeneinander positioniert sein. Die die in Querrichtung X jeweils benachbarten Untergruppen U,U',U" trennenden Täler können glatt bzw. eben, das heißt strukturlos, ausgebildet sein oder ein Höhenprofil aufweisen, dessen maximale Höhe jedoch jeweils kleiner ist als die der Täler der angrenzenden Untergruppe.

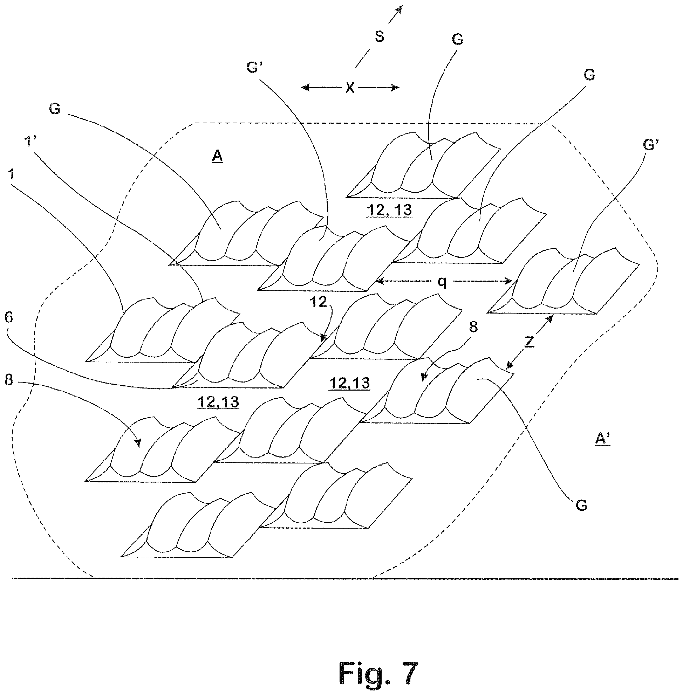

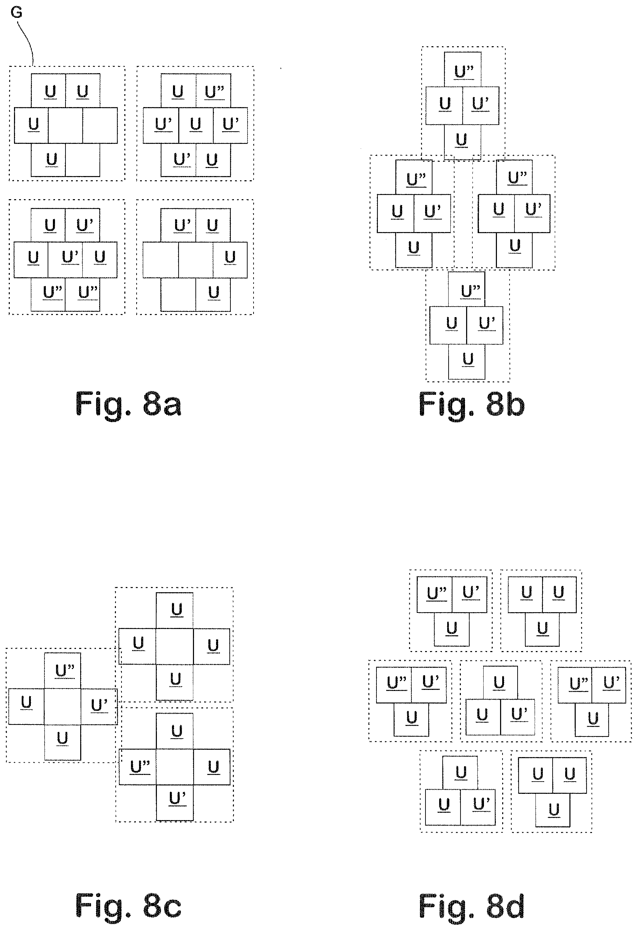

Wie in den Figuren 7, 8a - 8b angedeutet, kann eine Gruppe G,G' aus zwei, drei, vier, fünf oder mehr Untergruppen U,U',U" zusammengesetzt sein, wobei jede Gruppe G,G' sowohl zu der in Strömungsrichtung S als auch zu der in Querrichtung X jeweils benachbarten Gruppe G,G' einen Abstand Z aufweist. Die zwischen den Untergruppen U,U',U" vorhandenen Täler (Querrichtung X) und Abstandsflächen (Strömungsrichtung S) können wie bei der durch die Gruppen G,G' gebildeten Makrostruktur die Gruppen G',G' trennenden Täler 12,12' und Abstandsflächen 13,13' glatt sein oder ein flaches Profil aufweisen, das durch eine beliebige Funktion beschrieben ist. Auch hier gilt jedoch, dass das Höhenprofil der die Untergruppen trennenden Täler und der zwischen ihnen gegebenenfalls vorhandenen Abstandsflächen nicht höher ist als das der Rippen der Untergruppen.

Die zu einer Gruppe G,G' zusammengefassten Untergruppen U,U',U" können gleich oder unterschiedlich ausgebildet sein, um jeweils lokal ein bestimmtes Strömungsverhalten des die Oberfläche des Produktes P anströmenden Fluids in einer bestimmten Weise zu beeinflussen.

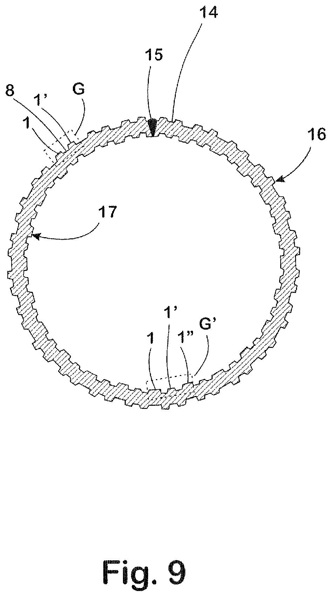

Das in Fig. 9 zur Verdeutlichung nicht maßstäblich dargestellte Rohr 14 für einen Wärmetauscher ist aus einem aus dem Produkt P gewonnenen Blechzuschnitt gefertigt worden, der in einem ersten Herstellungsschritt um einen Dorn zu einem Schlitzprofil mit kreisrundem Querschnitt gebogen worden ist. Der Fügeschlitz des Schlitzprofils ist dann mittels Laserstrahlschweißen durch eine Naht 15 geschlossen worden.

Sowohl auf seiner Außenfläche 16 als auch an seiner Innenfläche 17 ist das Rohr 14 mit einer erfindungsgemäßen Oberflächenstruktur versehen. An den Innenflächen 17 des von Wasser oder einem anderen Wärmetauschermedium durchströmten Rohrs 14 bewirkt diese Oberflächenstruktur einen verminderten Strömungswiderstand bei gleichzeitig optimalem Wärmeübergang von den Wandungen des Rohrs auf das Wärmetauschermedium. Die auf der Außenseite des Rohres 14 gebildete Oberflächenstruktur bewirkt dagegen ein optimales Wärmeabsorptionsvermögen. Insgesamt wird auf diese Weise mit Hilfe der erfindungsgemäßen Oberflächenstrukturierung die auf das Rohr 14 treffende Strahlungsenergie mit hohem Wirkungsgrad von dem Rohr 14 aufgenommen und an das das Rohr 14 durchströmende Medium abgegeben.

### BEZUGSZEICHEN

- 1, 1', 1": Rippen
- 2, 3: Flanken der Rippen 1,1',1"
- 4: Grundfläche der Rippen 1,1',1"
- 5: Dachfläche der Rippen 1,1',1"
- 6: Anströmfläche der Rippen 1,1',1"
- 7: Abströmfläche der Rippen 1,1',1"
- 8, 8', 8": Tal zwischen zwei Rippen 1,1',1" einer Gruppe G,G'
- 9: Boden des Tals 8,8',8"
- 10: Kante
- 11: Kehle
- 12, 12': zwei benachbarte Gruppen G,G' trennendes Tal
- 13, 13': Abstandsflächen
- 14: Rohr
- 15: Schweißnaht
- 16: Außenfläche des Rohrs 14
- 17: Innenfläche des Rohrs 14

- α1,α2: Winkel
- γ1,γ2: Winkel
- a,a': Dicke der Rippen 1,1',1"
- b,b',b": Höhe der Rippen 1,1',1"
- A': Oberflächenabschnitt
- A: Abschnitt der Oberfläche des Produkts P, in denen die Gruppen G,G' sitzen
- B: Breite des Produkts P
- D1,D2: Abstände zwischen in Strömungsrichtung S aufeinander folgenden Rippen 1,1',1"
- G,G': Gruppen
- L1,L2: Länge der Rippen 1,1',1"
- q,q': Abstände der Gruppen G,G'
- P: Produkt (Edelstahlblech)
- r1,r2: Übergangsradien
- S: Strömungsrichtung eines Fluids
- U,U',U": Untergruppen der Gruppen G,G'
- V: Versatz
- X: Querrichtung zur Strömungsrichtung S
- Z: Abstand

## Patentansprüche

1. Produkt für strömungstechnische Anwendungen, mit mindestens einem Oberflächenabschnitt (A), der dazu vorgesehen ist, mit einem in eine Strömungsrichtung (S) strömenden Fluid in Kontakt zu kommen, wobei in dem mit dem Fluid in Kontakt kommenden Abschnitt (A) Rippen (1,1',1") bestimmter Länge. (L1,L2) und Form ausgebildet sind, von denen benachbarte Rippen (1,1',1") zwischen sich jeweils ein Tal (8,8') begrenzen,
- wobei jeweils mindestens zwei Rippen (1,1',1"), die in Querrichtung (X) benachbart zueinander angeordnet sind, mit dem von ihnen jeweils begrenzten Tal (8,8') zu einer Gruppe (G,G') zusammengefasst sind, und
- wobei mindestens zwei Gruppen (G,G') vorhanden sind,
- wobei jede Gruppe (G,G') von jeder in Querrichtung (X) betrachtet benachbart zu ihr angeordneten Gruppe (G,G') durch ein Tal (12, 12') getrennt ist,
- wobei sich das auf die Querrichtung (X) bezogene Höhenprofil des die jeweiligen Gruppen- (G,G') voneinander trennenden Tals (12,12') jeweils vom auf die Querrichtung (X) bezogene Höhenprofil der Täler (8,8') unterscheidet, die durch diejenigen Rippen (1,1',1") der Gruppen (G,G') begrenzt sind, die gleichzeitig an das die Gruppen (G,G') voneinander trennende Tal (12,12') grenzen
- wobei in Strömungsrichtung (S) des Fluids betrachtet hintereinander liegende Gruppen (G,G') mit Abstand (Z) zueinander angeordnet sind
und
- wobei von zueinander in Querrichtung benachbarten und jeweils durch ein Tal (12) voneinander getrennten Gruppen (G,G') das Tal (8') der einen Gruppe (G) bezogen auf die Querrichtung (X) ein konkav geformtes Höhenprofil und das Tal (8) der jeweils benachbarten Gruppe (G') bezogen auf die Querrichtung (X) ein konvex geformtes Höhenprofil aufweist.

2. Produkt nach Anspruch 1, **dadurch gekennzeichnet, dass** der Boden (9) des die zueinander benachbart angeordneten Gruppen (G,G') jeweils trennenden Tals (12,12') tiefer liegt als der Boden der Täler (8,8') der an das sie trennende Tal (12,12') angrenzenden Gruppen (G,G').

3. Produkt nach einem der voranstehenden Ansprüche, **dadurch gekennzeichnet, dass** die Gruppen (G,G') in Strömungsrichtung (S) des Fluids betrachtet versetzt zueinander angeordnet sind.

4. Produkt nach einem der voranstehenden Ansprüche, **dadurch gekennzeichnet, dass** der Boden der Abstandsfläche (13,13'), die zwischen in Strömungsrichtung (S) beabstandet zueinander angeordneten Gruppen (G,G') vorhanden ist, tiefer liegt als der Boden (9) der Täler (8,8') der an die jeweilige Abstandsfläche (13,13') grenzenden Gruppen (G, G').

5. Produkt nach einem der voranstehenden Ansprüche, **dadurch gekennzeichnet, dass** Gruppen (G,G') in Strömungsrichtung (S) des Fluids betrachtet in Reihe hintereinander liegend angeordnet sind.

## Claims

1. Product for fluidic applications, with at least one surface segment (A) which is provided to come into contact with a fluid flowing in a flow direction (S), wherein in the segment (A) coming into contact with the fluid are formed ribs (1, 1', 1") of specific length (L1, L2) and shape, of which adjacent ribs (1, 1', 1") delimit between them in each case a valley (8, 8'),
- wherein in each case at least two ribs (1, 1', 1") which are arranged adjacent to each other in the transverse direction (X), with the valley (8, 8') they respectively delimit, are combined into a group (G, G'), and
- wherein at least two groups (G, G') are present,
- wherein each group (G, G') is separated from each group (G, G') arranged adjacent to it, viewed in the transverse direction (X), by a valley (12, 12'),
- wherein the height profile, with respect to the transverse direction (X), of the valley (12, 12') separating the respective groups (G, G') from each other differs in each case from the height profile, with respect to the transverse direction (X), of the valleys (8, 8') delimited by those ribs (1, 1', 1") of the groups (G, G') which at the same time are adjacent to the valley (12, 12') separating the groups (G, G') from each other
- wherein groups (G, G') lying behind each other viewed in the flow direction (S) of the fluid are arranged at a distance (Z) from each other
and
- wherein, in groups (G, G') adjacent to each other in the transverse direction and in each case separated from each other by a valley (12), the valley (8') of one group (G) has a concave-shaped height profile with respect to the transverse direction (X) and the valley (8) of the respectively adjacent group (G') has a convex-shaped height profile with respect to the transverse direction (X).

2. Product according to claim 1, **characterised in that** the floor (9) of the valley (12, 12') separating in each case the groups (G, G') arranged adjacent to each other is lower than the floor of the valleys (8, 8') of the groups (G, G') adjacent to the valley (12, 12') separating them.

3. Product according to any one of the preceding claims, **characterised in that** the groups (G, G') are arranged offset to each other viewed in the flow direction (S) of the fluid.

4. Product according to any one of the preceding claims, **characterised in that** the floor of the spacing area (13, 13') present between groups (G, G') arranged spaced from each other in the flow direction (S) is lower than the floor (9) of the valleys (8, 8') of the groups (G, G') adjacent to the respective spacing area (13, 13').

5. Product according to any one of the preceding claims, **characterised in that** groups (G, G') are arranged behind each other in a row viewed in the flow direction (S) of the fluid.

## Revendications

1. Produit pour applications en technique des fluides, comprenant au moins un segment de surface (A) qui est prévu pour entrer en contact avec un fluide s'écoulant dans un sens d'écoulement (S), des nervures (1, 1', 1") d'une longueur (L1, L2) et d'une forme définies étant conçues sur le segment (A) entrant en contact avec le fluide, à partir desquelles des nervures adjacentes (1, 1', 1") délimitent respectivement entre elles un creux (8, 8'),
- respectivement au moins deux nervures (1, 1', 11"), lesquelles sont agencées adjacentes l'une à l'autre en direction transversale (X), sont groupées, avec le creux (8, 8') étant délimité par elles, en un groupe (G, G'), et
- au moins deux groupes (G, G') étant présents,
- chaque groupe (G, G'), à partir du groupe (G, G') étant agencé adjacent à celui-ci, vu en direction transversale (X), étant séparé par un creux (12, 12'),
- le profil de hauteur du creux (12, 12'), séparant les groupes (G, G') respectifs l'un de l'autre, par rapport à la direction transversale (X), se différencie respectivement du profil de hauteur des creux (8, 8'), par rapport à la direction transversale (X), qui sont délimités par les dites nervures (1, 1', 1") des groupes.(G, G') qui sont simultanément adjacentes au creux (12, 12') séparant les groupes (G, G') l'un de l'autre,
- vu dans un sens d'écoulement (S) du fluide, des groupes (G, G'), se trouvant l'un derrière l'autre, sont agencés avec une distance (Z) entre eux, et
- les groupes (G, G'), étant adjacents l'un à l'autre en direction transversale et étant séparés l'un de l'autre par un creux (12), le creux (8') d'un groupe (G), par rapport à la direction transversale (X), présentant un profil de hauteur de forme concave et le creux (8) du groupe (G') respectivement adjacent, par rapport à la direction transversale (X), présentant un profil de hauteur de forme convexe.

2. Produit selon la revendication 1, **caractérisé en ce que** le fond (9) du creux (12, 12') séparant respectivement les groupes (G, G') agencés adjacents l'un à l'autre se situe plus bas que le fond des creux (8, 8') des groupes (G, G') adjacents au creux (12, 12') les séparant.

3. Produit selon l'une des revendications précédentes, **caractérisé en ce que** les groupes (G, G') sont agencés décalés l'un par rapport à l'autre, vu dans le sens d'écoulement (S) du fluide.

4. Produit selon l'une des revendications précédentes, **caractérisé en ce que** le fond de la surface d'espacement (13, 13'), laquelle est présente entre les groupes (G, G') agencés espacés l'un de l'autre dans le sens d'écoulement (S), se situe plus bas que le fond (9) des creux (8, 8') des groupes (G, G') adjacents à la surface d'espacement (13, 13') respective.

5. Produit selon l'une des revendications précédentes, **caractérisé en ce que** les groupes (G, G'), vu dans le sens d'écoulement (S) du fluide, sont agencés couchés et alignés l'un derrière l'autre.
